# EUROPÄISCHE PATENTSCHRIFT

(11) **EP 3 256 304 B1**
(45) Veröffentlichungstag und Bekanntmachung des Hinweises auf die Patenterteilung: **19.12.2018**
(21) Anmeldenummer: 15825597.6
(22) Anmeldetag: 17.11.2015
(51) Int. Cl.: B29C 45/37, B29C 45/26, B29C 33/30

(54) **TRAGPLATTEN-KOMPONENTEN-ANORDNUNG; VERFAHREN ZUR POSITIONIERUNG EINER KOMPONENTE MITTELS EINER VERDREHSICHERUNG IN EINER TRAGPLATTE**
CARRIER PLATE COMPONENT POSITIONING; PROCESS FOR POSITIONING A COMPONENT BY USE OF A ANTI-ROTATION LOCK ON A CARRIER PLATE
PLAQUE DE FIXATION ET COMPOSANT : PROCÉDÉ DE POSITIONNEMENT D'UN COMPOSANT SUR UNE PLAQUE DE FIXATION UTILISANT UN ARRÊT ANTI-ROTATION

(30) Priorität: 10.02.2015 DE 102015002041
(43) Veröffentlichungstag der Anmeldung: 20.12.2017
(73) Patentinhaber: Gebr. Eberhard GmbH & Co. KG., 74080 Heilbronn (DE)
(72) Erfinder: HENNIGE, Herbert, 74912 Kirchhardt-Berwangen (DE)
(74) Vertreter: Müller, Thomas
(86) Internationale Anmeldenummer: PCT/DE2015/000556
(87) Internationale Veröffentlichungsnummer: WO 2016/127966

(56) Entgegenhaltungen:
- CH-A5- 679 917
- DE-A1- 4 142 102
- DE-A1-102005 045 550
- DE-A1-102005 061 608
- DE-U1- 8 712 256

## Beschreibung

### Stand der Technik

Die Erfindung geht aus von einer Tragplatten-Komponenten-Anordnung, nach der Gattung des Anspruchs 1, und einem Verfahren zur Positionierung einer Komponente mittels einer Verdrehsicherung in einer Tragplatte, nach der Gattung des Anspruchs 11.

Tragplatten-Komponenten-Anordnungen gehören neben z.B. dem in den Gebrauchsmusterschrift DE 295 04 224 U1 offenbarten Werkzeug zum Einprägen von Daten, der in der Gebrauchsmusterschrift DE 87 12 256 U1 bzw. der Patentschrift CH 679917 A5 offenbarten Vorrichtung zur Halterung von Markierungs-Stempeln an Spritz- bzw. Pressgussformwerkzeugen, dem in der Patentschrift US 4,828,479 offenbarten Wechseleinsatz für eine Kavität oder der in der Offenlegungsschrift DE 41 42 102 A1 offenbarten Preßformanordnung zum Herstellen von aus Gummi bestehenden Kraftfahrzeugpaßformmatten seit langer Zeit zum Stand der Technik. Insbesondere werden diese in Kunststoff-/Metalispritzwerkzeugen, Druckgusswerkzeugen, Stanzwerkzeugen oder Umformwerkzeugen eingesetzt. Die darin enthaltenen Komponenten (Werkzeug-, Vorrichtungs- und Maschinenbau-Komponenten) sind beispielsweise Auswerfer, Kerne, Schneidstempel, Umformstempel, Positionierstifte, Umformstempel oder Tiefziehstempel. Diese Komponenten bestehen in der Regel aus einem Schaft und einem daran befindlichen Kopf. Der Kopf, der gegenüber dem Schaft einen größeren Durchmesser aufweist, ist meist in Zylinderform ausgeführt, kann aber auch in anderen Formen ausgeprägt sein. Zum Einbau der Komponenten in die Tragplatte wird der Schaft der Komponente in einer in der Tragplatte befindliche Durchgangsbohrung eingeführt, bis der Kopf in einer der Kopfform komplementären Aufnahme (Senkung) der Tragplatte zum Aufliegen kommt. Der Kopf hat die Aufgabe, Kräfte auf den Schaft zu übertragen oder von diesem zu übernehmen. Der Schaft überträgt seinerseits Kräfte auf im Werkzeug oder in der Vorrichtung befindliche Werkstücke oder übernimmt formgebende Aufgaben. Bevorzugte Anwendungen sind das Ausstoßen von Teilen, die Formgebung durch Umspritzung/Umhüllung mit Werkstoffen in einer Kavität, die Formgebung durch Stanzen, das Umformen oder Tiefziehen oder die Positionierung von Werkstücken durch einen definierten Eingriff in das Werkstück. Um diese Anwendungen bewerkstelligen zu können, sind am Schaft für die Ausführung dieser Aufgaben entsprechende Anarbeitungen ausgeführt. Diese Anarbeitungen müssen in einer definierten Position im Werkzeug/in der Vorrichtung und zum Werkstück ausgerichtet sein, soweit die Formgebung oder der Positioniereingriff nicht rotationssymmetrisch bezüglich einer Längsachse der Komponente ist. Zur Sicherstellung dieser definierten Position beim Einbau der Komponente bzw. Zusammenbau des Werkzeuges/der Vorrichtung und im laufenden Betrieb, werden Verdrehsicherungen eingesetzt, durch die eine Drehung des Schaftes um die eigene Längsachse verhindert wird. Bekannte auf dem Markt befindliche Verdrehsicherungen zeichnen sich durch eine Veränderung der Kopfform in der Weise aus, dass an bereits fertig hergestellten Komponenten eine oder mehrere Flächen angearbeitet werden. So wird in der Gebrauchsmusterschrift DE 20 2004 018 293 U1 ein Auswerferstift zum Auswerfen von Teilen aus Gießwerkzeugen offenbart, der aus einem Schaft und einem daran angeformten Kopf besteht, wobei der Kopf wenigstens zwei gegenüberliegende geradlinige Umfangsabschnitte aufweist. Die sich dadurch ergebende Kopfform wird dann in die Tragplatte komplementär als Aufnahme eingearbeitet, so dass der Auswerferstift in der Aufnahme der komplementären Tragplatte nur in einer eindeutigen Einbauposition montierbar ist, wodurch über einen Formschluss eine Verdrehsicherung gebildet wird. Nachteilig ist hierbei der hohe Kostenanteil, der durch eine aufwändige Bearbeitung des Komponentenkopfes, der Einbringung der komplementären Aufnahme in der Tragplatte und dem Einbau der Komponente in die Tragplatte verursacht wird. Weitere Nachteile ergeben sich dadurch, dass eine 360°-Symmetrie nur mit zusätzlichem Aufwand z.B. durch unterschiedliche Abflachung der angearbeiteten Flächen erreicht wird, eine zu große Flächenreduzierung zu einer Verringerung der Kraftaufnahme/-übertragung des Kopfes führt und nur unzureichende Toleranzen erreicht werden.

Auch mit anderen Ausführungen, die z.B. eine Verdrehsicherung durch eine exzentrische Position des Kopfes zum Schaft (Exzenterkopf) erzielen, können diese Nachteile nicht vollständig überwunden werden.

### Die Erfindung und ihre Vorteile

Die erfindungsgemäße Tragplatten-Komponenten-Anordnung, mit den kennzeichnenden Merkmalen des Anspruchs 1, und das erfindungsgemäße Verfahren zur Positionierung einer Komponente mittels einer Verdrehsicherung in einer Tragplatte, mit dem kennzeichnenden Merkmal des Anspruchs 11, haben demgegenüber den Vorteil, dass eine Sicherstellung der definierten Einbauposition über eine Ausnehmung am Schaft und/oder Kopf einer Komponente und ein Sicherungselement erfolgt, wodurch die Ausnehmung zusammen mit einer komplementären Aufnahme in einer die Komponente aufnehmenden Tragplatte/Vorrichtung mittels des Sicherungselementes einen Formschluss bildet, wobei die Komponente ein Auswerfer, ein Kern, ein Schneidstempel, ein Umformstempel, ein Positionierstift oder ein Tiefziehstempel.

Nach einer zusätzlichen vorteilhaften Ausgestaltung der erfindungsgemäßen Tragplatten-Komponenten-Anordnung weist die Komponente eine Einbauposition in der Tragplatte auf, die über die mindestens eine an der Komponente angeordnete Ausnehmung und das Sicherungselement gewährleistet ist.

Nach einer zusätzlichen vorteilhaften Ausgestaltung der erfindungsgemäßen Tragplatten-Komponenten-Anordnung sind das Sicherungselement in die an der Komponente angeordnete Ausnehmung und die an der Tragplatte angeordnete Aufnahme, die an der Tragplatte angeordnete Bohrung oder die an der Tragplatte angeordnete Bohrung mit einer Aufnahme derart angeordnet, dass die Komponente und die Tragplatte formschlüssig durch das Sicherungselement miteinander verbunden sind.

Nach einer zusätzlichen vorteilhaften Ausgestaltung der erfindungsgemäßen Tragplatten-Komponenten-Anordnung weist eine an der Komponente angeordnete Ausnehmung ein Kreissegment und/oder geradlinige Umfangsabschnitte auf.

Nach einer zusätzlichen vorteilhaften Ausgestaltung der erfindungsgemäßen Tragplatten-Komponenten-Anordnung ist die an der Komponente angeordnete Ausnehmung am Schaft und/oder am in der Aufnahme aufnehmbaren Kopf angeordnet.

Nach einer zusätzlichen vorteilhaften Ausgestaltung der erfindungsgemäßen Tragplatten-Komponenten-Anordnung weist der Schaft mindestens eine Anarbeitung auf. Daher bedarf es beim Einbau der Komponente bzw. Zusammenbau des Werkzeuges/der Vorrichtung und im laufenden Betrieb einer Sicherstellung einer definierten Position durch eine Verdrehsicherung.

Nach einer zusätzlichen vorteilhaften Ausgestaltung der erfindungsgemäßen Tragplatten-Komponenten-Anordnung weist der Schaft eine Längsachse auf, wobei eine an einem Ende des Schaftes angeordnete Stirnseite relativ zur Längsachse geneigt ist. Auch in diesem Fall bedarf es beim Einbau der Komponente bzw. Zusammenbau des Werkzeuges/der Vorrichtung und im laufenden Betrieb einer Sicherstellung einer definierten Position durch eine Verdrehsicherung.

Nach einer zusätzlichen vorteilhaften Ausgestaltung der erfindungsgemäßen Tragplatten-Komponenten-Anordnung weist eine an der Tragplatte angeordnete Aufnahme ein Kreissegment und/oder geradlinige Umfangsabschnitte auf.

Nach einer zusätzlichen vorteilhaften Ausgestaltung der erfindungsgemäßen Tragplatten-Komponenten-Anordnung ist das Sicherungselement eine Sicherungsscheibe, ein Stift, ein Stift mit Innengewinde, eine Madenschraube, eine Schraube mit Kopf odgl..

Nach einer zusätzlichen vorteilhaften Ausgestaltung der erfindungsgemäßen Tragplatten-Komponenten-Anordnung ist die Tragplatten-Komponenten-Anordnung Teil eines Kunststoff-/Metallspritzwerkzeuges, eines Druckgusswerkzeuges, eines Stanzwerkzeuges, eines Umformwerkzeuges odgl..

Nach einer vorteilhaften Ausgestaltung des erfindungsgemäßen Verfahrens zur Positionierung einer Komponente mittels einer Verdrehsicherung in einer Tragplatte, wobei die Tragplatte mindestens eine Bohrung und/oder eine Bohrung mit einer Aufnahme aufweist und die Komponente, die mindestens eine Ausnehmung aufweist, so dass die Komponente mittels der Verdrehsicherung verdrehsicher in der Bohrung der Tragplatte und/oder in der Bohrung mit einer Aufnahme an der Tragplatte anordbar ist, wobei die Komponente einen eine Längsachse aufweisenden Schaft oder einen einen eine Längsachse aufweisende Schaft, an dessen einem Ende ein zumindest teilweise in der Aufnahme aufnehmbarer Kopf angeordnet ist, aufweist, und als Verdrehsicherung ein Sicherungselement eingesetzt wird, das in der Aufnahme, der Bohrung oder der Bohrung mit einer Aufnahme an der Tragplatte angeordnet ist, wobei das Sicherungselement (7) eine Längsachse aufweist, die neben dem Schaft (2) angeordnet ist, wobei die Längsachse des Sicherungselementes (7) und die Längsachse (10) des Schaftes (2) die mindestens eine Bohrung und/oder eine Bohrung mit einer Aufnahme aufweisende Oberfläche der Tragplatte (6) schneiden, so dass das Sicherungselement einen Formschluss zwischen der Komponente, die ein Auswerfer, ein Kern, ein Schneidstempel, ein Umformstempel, ein Positionierstift oder ein Tiefziehstempel ist, und der Tragplatte bewirkt, ist die Positionierung der Komponente abhängig von der Ausrichtung einer Stirnseite des Schaftes, die am Ende des Schaftes, der eine Längsachse aufweist, angeordnet ist.

Nach einer zusätzlichen vorteilhaften Ausgestaltung des erfindungsgemäßen Verfahrens ist die Positionierung der Komponente abhängig ist von der Ausrichtung einer Stirnseite des Schaftes, die am Ende des Schaftes, der eine Längsachse aufweist, angeordnet ist, die relativ zur Längsachse geneigt ist.

Weitere Vorteile und vorteilhafte Ausgestaltung der Erfindung sind der nachfolgenden Beschreibung, der Zeichnung und den Ansprüchen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1: eine Aufsicht auf eine als Auswerfer ausgebildete Komponente,
- Fig.2: eine Seitenansicht auf den Auswerfer gemäß Fig. 1,
- Fig. 3: eine Aufsicht auf eine erfindungsgemäße Tragplatten-Komponenten-Anordnung,
- Fig.4: eine Seitenansicht auf die erfindungsgemäße Tragplatten-Komponenten-Anordnung gemäß Fig. 3,
- Fig. 5: eine Aufsicht auf ein weiteres Ausführungsbeispiel einer erfindungsgemäßen Tragplatten-Komponenten-Anordnung,
- Fig. 6: eine Seitenansicht auf das Ausführungsbeispiel der erfindungsgemäßen Tragplatten-Komponenten-Anordnung, gemäß Fig. 5,
- Fig. 7: eine Aufsicht auf ein weiteres Ausführungsbeispiel einer erfindungsgemäßen Tragplatten-Komponenten-Anordnung,
- Fig. 8: eine Seitenansicht auf das Ausführungsbeispiel der erfindungsgemäßen Tragplatten-Komponenten-Anordnung, gemäß Fig. 7,
- Fig. 9: eine Aufsicht auf ein weiteres Ausführungsbeispiel einer erfindungsgemäßen Tragplatten-Komponenten-Anordnung,
- Fig. 10: eine Seitenansicht auf das Ausführungsbeispiel der erfindungsgemäßen Tragplatten-Komponenten-Anordnung, gemäß Fig. 9, und
- Fig. 11: einen Ausschnitt einer Aufsicht auf ein weiteres Ausführungsbeispiel einer als Auswerfer ausgebildeten Komponente.

### Beschreibung des Ausführungsbeispiels

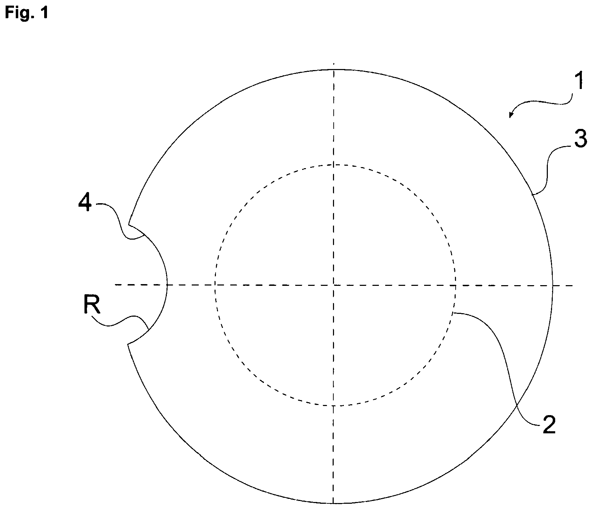

Fig. 1 zeigt eine Aufsicht auf eine als Auswerfer ausgebildete Komponente 1. Der Auswerfer weist einen Schaft 2 auf, an dessen einem Ende ein Kopf 3 angeordnet ist. An dem Kopf 3 ist eine Ausnehmung 4 für ein Sicherungselement angeordnet, die den Radius R aufweist. Durch das in der Ausnehmung 4 angeordnete Sicherungselement erfolgt eine Sicherstellung einer definierten Einbauposition der Komponente 1 in eine nicht dargestellte Tragplatte (Halteplatte). Insbesondere verhindert eine eindeutige 360°-Symmetrie eine falsche Positionierung beim Einbau. Dabei ist die Herstellung einer derartigen Komponente 1 deutlich günstiger als die Herstellung von zum Stand der Technik gehörenden Komponenten. Ein weiterer Vorteil zeigt sich darin, dass die Komponenten 1 auch ohne Nutzung eines Sicherungselementes eingesetzt werden können, da der Verlust der Kraftaufnahme- bzw. Kraftübertragungsfähigkeit aufgrund der fehlenden Fläche in Form der Ausnehmung am Kopf 3 vernachlässigbar ist, da die verbleibende Fläche groß genug ist. Als Folge muss nur eine Ausführung dieser Komponente 1 lagermäßig bevorratet werden. Zusätzlich ergeben sich geringe Kosten des Einbaus bzw. der Einbringung einer Aufnahme in einer Tragplatte. Die Ausnehmung 4 kann, wie in Fig. 1 dargestellt, sowohl als Kreissegment als auch in anderen geometrischen Formen ausgeführt sein. Diese Ausnehmung 4 wird bereits im Verlauf des Komponenten-Produktionsprozesses hergestellt, bspw. durch das Umformverfahren Stauchen. Andere Ausführungsformen mit mehr als einer Ausnehmung 4 erlauben eine noch engere Toleranz, wobei bereits mit einer Ausnehmung 4 ausreichende Toleranzen von 0,01 mm erreicht werden. Die erforderlichen Toleranz-Anforderungen in Bezug auf Verdrehung und in radialer Richtung werden somit in jedem Fall erfüllt. Zudem ist es auch denkbar, dass an einer Komponente 1 mehrere und ggfls. unterschiedlich ausgestaltete Ausnehmungen 4 angeordnet werden, wodurch noch bessere Toleranzwerte erzeugt werden können.

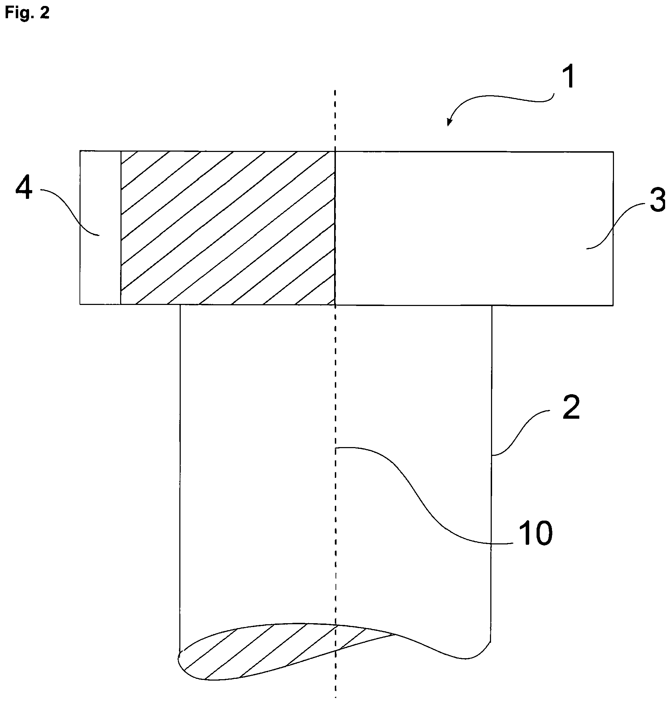

Fig. 2 zeigt eine Seitenansicht auf den Auswerfer gemäß Fig. 1. Hierbei ist ersichtlich, dass sich die Ausnehmung 4 über die gesamte Höhe des Kopfes 3 erstreckt. Selbstverständlich ist es auch denkbar, dass die Ausnehmung 4 nur einen Teil der Höhe des Kopfes einnimmt.

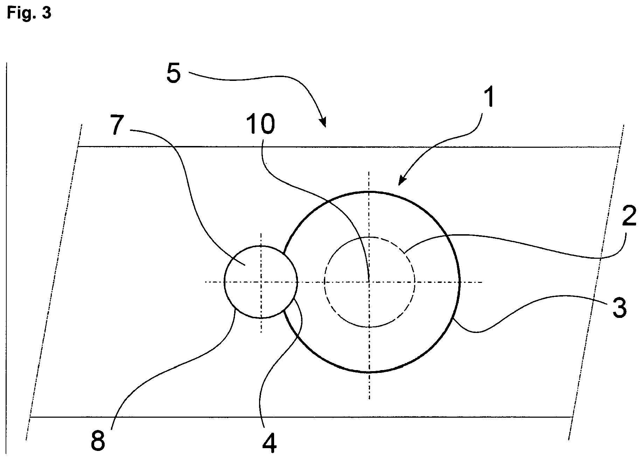

Fig. 3 zeigt eine Aufsicht auf eine erfindungsgemäße Tragplatten-Komponenten-Anordnung 5. Dabei wird die in einer Tragplatte 6 angeordnete Komponente 1 mittels eines Sicherungselementes 7 in Form eines Sicherungsstiftes, der in die Ausnehmung 4 eingreift und bündig in der Aufnahme 8 der Tragplatte 6 angeordnet ist, gegen ein Verdrehen gesichert. Die Funktion einer Verdrehsicherung wird erfüllt, da die eine Verdrehung bewirkenden Kräfte über einen Formschluss ausreichend und zuverlässig aufgenommen werden können, ohne dass es zu einer Verdrehung kommt. Dabei ist die Flächenreduzierung bezüglich der Kraftaufnahme/-übertragung des Kopfes 3 kleiner als bei bekannten Ausführungen mit einer oder mehreren angearbeiteten Flächen, da ein Teil des Formschlusses in die Tragplatte 6 verlagert wird.

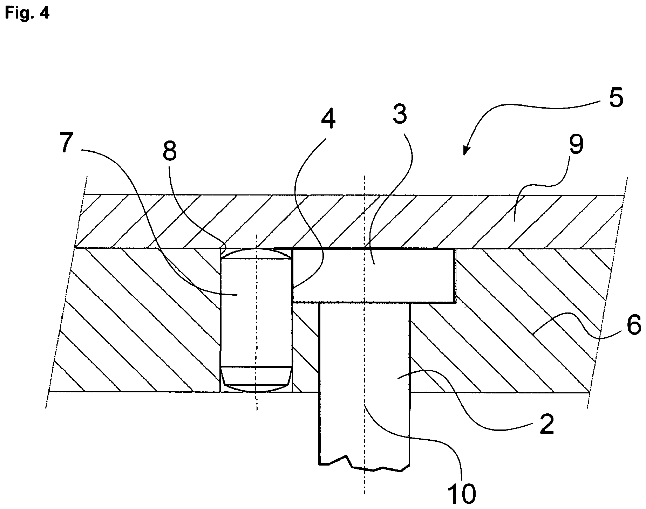

Fig. 4 zeigt eine Seitenansicht auf die erfindungsgemäße Tragplatten-Komponenten-Anordnung 5 gemäß Fig. 3. In dem gezeigten Beispiel ist das Sicherungselement 7 als Sicherungsstift ausgestaltet, der sich in einer an der Tragplatte 6 angeordneten Aufnahme 8 über die gesamte Höhe der Tragplatte 6 erstreckt. Zur Fixierung der Komponente 1 und des Sicherungselementes 7 ist an der Trägerplatte 6 eine Druckplatte 9 angeordnet. Neben der Ausgestaltung der Aufnahme 8 als Bohrung, ist es selbstverständlich auch denkbar, dass die Aufnahme 8 als z.B. Sackloch beispielsweise zur Aufnahme einer Sicherungsscheibe ausgebildet ist. Der Schaft 2 weist eine Längsachse 10 auf. Dabei kann an dem dem Kopf 3 abgewandten Ende eine Anarbeitung angeordnet sein. Denkbar sind dabei Anarbeitungen in den unterschiedlichsten Ausführungen. Eine Ausführungsform einer Anarbeitung könnte beispielsweise dadurch gegeben sein, dass das dem Kopf 3 abgewandte Ende relativ zu einer Längsachse 10 geneigt ausgestaltet ist. Bevorzugt kann zur Herstellung dieser Anarbeitung, insbesondere dieser Neigung des Schaftendes, die Ausnehmung 4 herangezogen werden, da diese als Auflagepunkt eine eindeutige Ausrichtung bei der Bearbeitung des Schafts 2 darstellt.

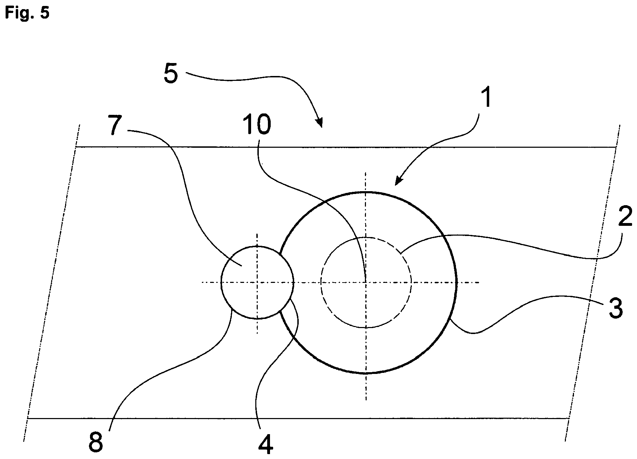

Fig. 5 zeigt eine Aufsicht auf ein weiteres Ausführungsbeispiel einer erfindungsgemäßen Tragplatten-Komponenten-Anordnung 5, bei der das Sicherungselement 7 als Sicherungsscheibe ausgestaltet ist.

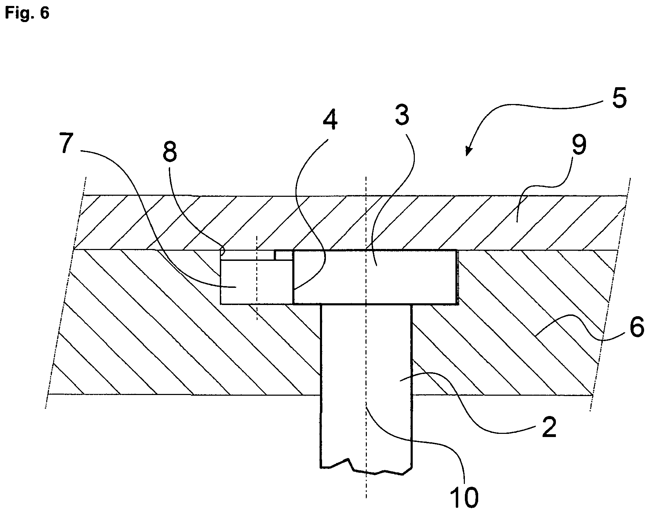

Fig. 6 zeigt eine Seitenansicht auf das Ausführungsbeispiel der erfindungsgemäßen Tragplatten-Komponenten-Anordnung 5 gemäß Fig. 5, bei der das Sicherungselement 7 als Sicherungsscheibe ausgestaltet ist.

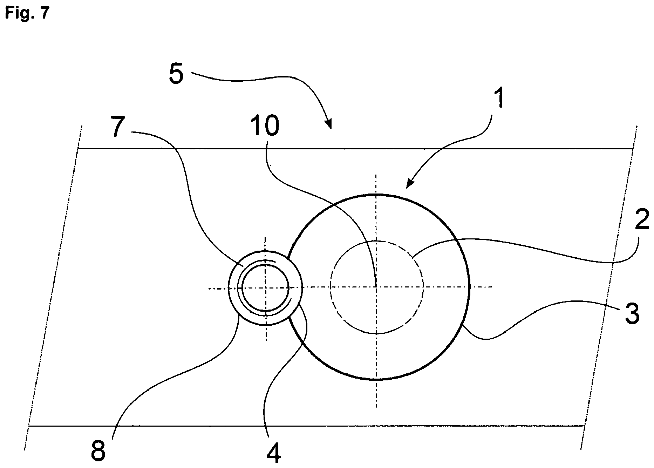

Fig 7 zeigt eine Aufsicht auf ein weiteres Ausführungsbeispiel einer erfindungsgemäßen Tragplatten-Komponenten-Anordnung 5, bei der das Sicherungselement 7 als Zylinderstift ausgestaltet ist.

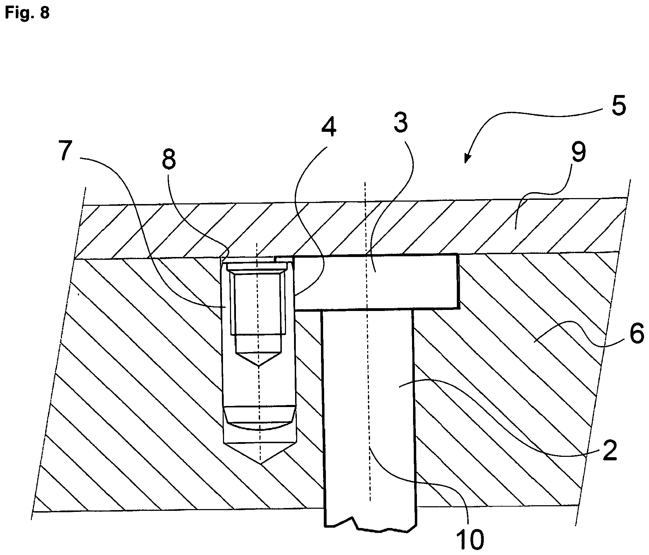

Fig. 8 zeigt eine Seitenansicht auf das Ausführungsbeispiel der erfindungsgemäßen Tragplatten-Komponenten-Anordnung 5 gemäß Fig. 7, bei der das Sicherungselement 7 als Zylinderstift ausgestaltet ist.

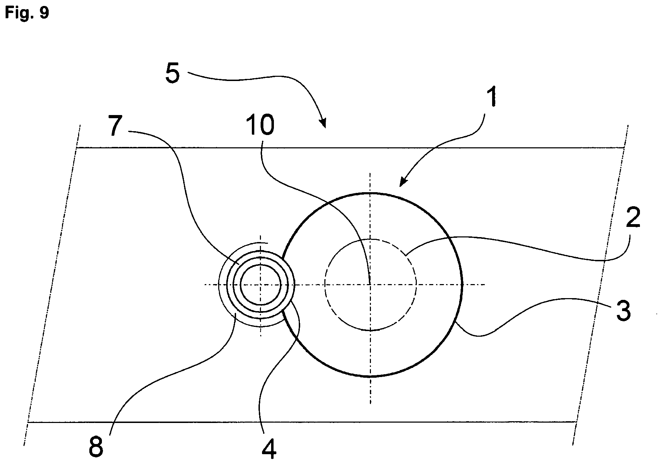

Fig. 9 zeigt eine Aufsicht auf ein weiteres Ausführungsbeispiel einer erfindungsgemäßen Tragplatten-Komponenten-Anordnung 5, bei der das Sicherungselement 7 als Gewindestift ausgestaltet ist.

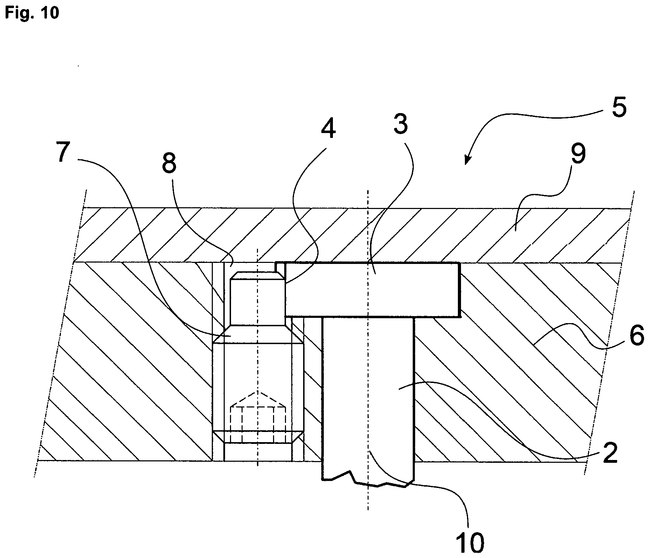

Fig. 10 zeigt eine Seitenansicht auf das Ausführungsbeispiel der erfindungsgemäßen Tragpiatten-Komponenten-Anordnung 5 gemäß Fig. 9, bei der das Sicherungselement 7 als Gewindestift ausgestaltet ist.

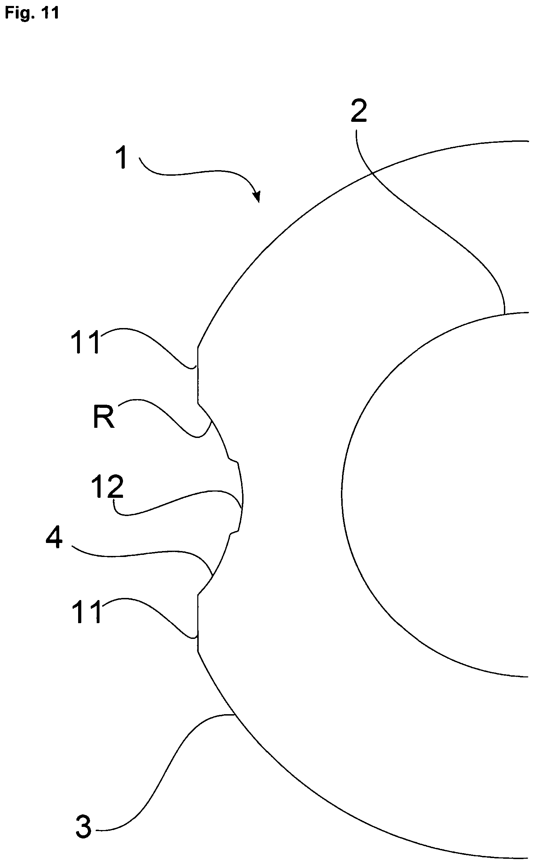

Fig. 11 zeigt einen Ausschnitt einer Aufsicht auf ein weiteres Ausführungsbeispiel einer als Auswerfer ausgebildeten Komponente 1. An dem Kopf 3 ist eine Ausnehmung 4 für ein Sicherungselement angeordnet, die den Radius R aufweist. Am Rand des Kopfes 3 sind Abflachungen 11 angeordnet, von denen mindestens eine Abflachung 11, da diese als Auflagepunkt eine eindeutige Ausrichtung bei der Bearbeitung des Schafts 2 darstellt, zusammen mit der Ausnehmung 4 oder anstelle der Ausnehmung 4 zur Herstellung einer Anarbeitung, insbesondere einer Neigung des Schaftendes, herangezogen werden kann, wodurch noch bessere Toleranzwerte erzeugt werden können. Zusätzlich weist die Ausnehmung 4 noch mindestens eine weitere Ausnehmung 12 auf, die ebenfalls zur Herstellung einer Anarbeitung, insbesondere einer Neigung des Schaftendes, herangezogen werden kann, da diese als Auflagepunkt eine eindeutige Ausrichtung bei der Bearbeitung des Schafts 2 darstellt, wodurch noch bessere Toleranzwerte erzeugt werden können.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Komponente
- 2: Schaft
- 3: Kopf
- 4: Ausnehmung
- 5: Tragplatten-Komponenten-Anordnung
- 6: Tragplatte
- 7: Sicherungselement
- 8: Aufnahme
- 9: Druckplatte
- 10: Längsachse
- 11: Abflachung
- 12: Ausnehmung

- R: Radius

## Patentansprüche

1. Tragplatten-Komponenten-Anordnung (5),
- mit einer Tragplatte (6), die an ihrer Oberfläche mindestens eine Bohrung und/oder eine Bohrung mit einer Aufnahme aufweist und
- mit mindestens einer Komponente (1), die mindestens eine Ausnehmung (4) aufweist, so dass die Komponente (1) mittels einer Verdrehsicherung verdrehsicher in einer Bohrung der Tragplatte (6) und/oder in einer Bohrung mit einer Aufnahme an der Tragplatte (6) anordbar ist, wobei die Komponente (1) einen eine Längsachse (10) aufweisenden Schaft (2) oder einen eine Längsachse (10) aufweisenden Schaft (2), an dessen einem Ende ein zumindest teilweise in der Aufnahme aufnehmbarer Kopf (3) angeordnet ist, aufweist,
**dadurch gekennzeichnet,**
**dass** die Komponente (1) ein Auswerfer, ein Kern, ein Schneidstempel, ein Umformstempel, ein Positionierstift oder ein Tiefziehstempel ist und
**dass** die mit einer an der Komponente (1) angeordneten Ausnehmung (4) zusammen wirkende Verdrehsicherung ein Sicherungselement (7) ist, das in einer Aufnahme (8), einer Bohrung oder einer Bohrung mit einer Aufnahme (8) an der Tragplatte (6) angeordnet ist, wobei das Sicherungselement (7) eine Längsachse aufweist, die neben dem Schaft (2) angeordnet ist, wobei die Längsachse des Sicherungselementes (7) und die Längsachse (10) des Schaftes (2) die mindestens eine Bohrung und/oder eine Bohrung mit einer Aufnahme aufweisende Oberfläche der Tragplatte (6) schneiden.

2. Tragplatten-Komponenten-Anordnung (5), nach Anspruch 1,
**dadurch gekennzeichnet,**
**dass** die Komponente (1) eine Einbauposition in der Tragplatte (3) aufweist, die über die mindestens eine an der Komponente (1) angeordnete Ausnehmung (4) und das Sicherungselement (7) gewährleistet ist.

3. Tragplatten-Komponenten-Anordnung (5), nach Anspruch 1 oder Anspruch 2,
**dadurch gekennzeichnet,**
**dass** das Sicherungselement (7) in die an der Komponente (1) angeordnete Ausnehmung (4) und die an der Tragplatte (3) angeordnete Aufnahme (8), die an der Tragplatte (3) angeordnete Bohrung oder die an der Tragplatte (3) angeordnete Bohrung mit einer Aufnahme (8) derart angeordnet ist, dass die Komponente (1) und die Tragplatte (3) formschlüssig durch das Sicherungselement (7) miteinander verbunden sind.

4. Tragplatten-Komponenten-Anordnung (5), nach einem der vorhergehenden Ansprüche,
**dadurch gekennzeichnet,**
**dass** eine an der Komponente (1) angeordnete Ausnehmung (4) ein Kreissegment und/oder geradlinige Umfangsabschnitte aufweist.

5. Tragplatten-Komponenten-Anordnung (5), nach einem der vorhergehenden Ansprüche,
**dadurch gekennzeichnet,**
**dass** die an der Komponente (1) angeordnete Ausnehmung (4) am Schaft (2) und/oder am in der Aufnahme (8) aufnehmbaren Kopf (3) angeordnet ist.

6. Tragplatten-Komponenten-Anordnung (5), nach einem der vorhergehenden Ansprüche,
**dadurch gekennzeichnet,**
**dass** der Schaft (2) mindestens eine Anarbeitung aufweist.

7. Tragplatten-Komponenten-Anordnung (5), nach einem der vorhergehenden Ansprüche,
**dadurch gekennzeichnet,**
**dass** der Schaft (2) eine Längsachse (10) aufweist, wobei eine an einem Ende des Schaftes (2) angeordnete Stirnseite relativ zur Längsachse (10) geneigt ist.

8. Tragplatten-Komponenten-Anordnung (5), nach einem der vorhergehenden Ansprüche,
**dadurch gekennzeichnet,**
**dass** eine an der Tragplatte (6) angeordnete Aufnahme (8) ein Kreissegment und/oder geradlinige Umfangsabschnitte aufweist.

9. Tragplatten-Komponenten-Anordnung (5), nach einem der vorhergehenden Ansprüche,
**dadurch gekennzeichnet,**
**dass** das Sicherungselement (7) eine Sicherungsscheibe, ein Stift, ein Stift mit Innengewinde, eine Madenschraube, eine Schraube mit Kopf odgl. ist.

10. Tragplatten-Komponenten-Anordnung (5), nach einem der vorhergehenden Ansprüche,
**dadurch gekennzeichnet,**
**dass** die Tragplatten-Komponenten-Anordnung (5) Teil eines Kunststoff-/Metallspritzwerkzeuges, eines Druckgusswerkzeuges, eines Stanzwerkzeuges, eines Umformwerkzeuges odgl. ist.

11. Verfahren zur Positionierung einer Komponente (1) mittels einer Verdrehsicherung in einer Tragplatte (6), wobei die Tragplatte (6) an ihrer Oberfläche mindestens eine Bohrung und/oder eine Bohrung mit einer Aufnahme (8) aufweist und die Komponente (1), die mindestens eine Ausnehmung (4) aufweist, so dass die Komponente (1) mittels der Verdrehsicherung verdrehsicher in der Bohrung der Tragplatte (6) und/oder in der Bohrung mit einer Aufnahme (8) an der Tragplatte (6) anordbar ist, wobei die Komponente (1) einen eine Längsachse (10) aufweisenden Schaft (2) oder einen eine Längsachse (10) aufweisenden Schaft (2), an dessen einem Ende ein zumindest teilweise in der Aufnahme (8) aufnehmbarer Kopf (3) angeordnet ist, aufweist,
**dadurch gekennzeichnet,**
**dass** als Verdrehsicherung ein Sicherungselement (7) eingesetzt wird, das in der Aufnahme (8), der Bohrung oder der Bohrung mit einer Aufnahme (8) an der Tragplatte (6) angeordnet ist, wobei das Sicherungselement (7) eine Längsachse aufweist, die neben dem Schaft (2) angeordnet ist, wobei die Längsachse des Sicherungselementes (7) und die Längsachse (10) des Schaftes (2) die mindestens eine Bohrung und/oder eine Bohrung mit einer Aufnahme aufweisende Oberfläche der Tragplatte (6) schneiden, so dass das Sicherungselement (7) einen Formschluss zwischen der Komponente (1), die ein Auswerfer, ein Kern, ein Schneidstempel, ein Umformstempel, ein Positionierstift oder ein Tiefziehstempel ist, und der Tragplatte (6) bewirkt.

12. Verfahren, nach Anspruch 11,
**dadurch gekennzeichnet,**
**dass** die Positionierung der Komponente (1) abhängig ist von der Ausrichtung einer Stirnseite des Schaftes (2), die am Ende des Schaftes (2), der eine Längsachse (10) aufweist, angeordnet ist.

13. Verfahren, nach Anspruch 11 oder Anspruch 12,
**dadurch gekennzeichnet,**
**dass** die Positionierung der Komponente (1) abhängig ist von der Ausrichtung einer Stirnseite des Schaftes (2), die am Ende des Schaftes (2), der eine Längsachse (10) aufweist, angeordnet ist, die relativ zur Längsachse (10) geneigt ist.

## Claims

1. Base plate-component assembly (5),
- having a base plate (6) which has at least one borehole and/or a borehole with a seating on the surface thereof, and
- having at least one component (1) which has at least one recess (4), so that the component (1) can be arranged non-rotatably in a borehole on the base plate (6) and/or in a borehole with a seating on the base plate (6) by means of an anti-twist protection, wherein the component (1) has a shaft (2) with a longitudinal axis (10) or a shaft (2) with a longitudinal axis (10) on one end of which there is a head (3) which can be at least partly accommodated in the seating,
**characterized in that**
the component (1) is an ejector, a core, a cutting punch a forming punch, a positioning pin or a deep-drawing ram and
that the anti-twist protection cooperating with a recess (4) on the component (1) is a safety element (7) which is disposed in a seating (8), a borehole, or a borehole with a seating (8) on the base plate (6), wherein the safety element (7) has a longitudinal axis that is aligned beside the shaft (2), wherein the longitudinal axis of the safety element (7) and the longitudinal axis (10) of the shaft (2) intersect the surface of the base plate (6) having at least one borehole and/or one borehole with a seating.

2. Base plate-component assembly (5) according to Claim 1, **characterized in that** the component (1) has a mounting position in the base plate (3) which is assured by means of the at least one recess (4) arranged on the component (1) and by the safety element (7).

3. Base plate-component assembly (5) according to Claim 1 or Claim 2, **characterized in that** the safety element (7) is arranged in the recess (4) on the component (1) and in the seating (8) on the base plate (3), the borehole arranged on the base plate (3) or the borehole with a seating (8) on the base plate (3) in such manner that the component (1) and the base plate (3) are joined to each other in positive locking manner by the safety element (7).

4. Base plate-component assembly (5) according to any one of the preceding claims, **characterized in that** a recess (4) arranged on the component (1) includes a circle segment and/or straight circumferential sections.

5. Base plate-component assembly (5) according to any one of the preceding claims, **characterized in that** the recess (4) arranged on the component (1) is arranged on the shaft (2) and/or on the head (3) which can be accommodated in the seating (8).

6. Base plate-component assembly (5) according to any one of the preceding claims, **characterized in that** the shaft (2) has at least one premachined portion.

7. Base plate-component assembly (5) according to any one of the preceding claims, **characterized in that** the shaft (2) has a longitudinal axis (10), wherein a front face on one end of the shaft (2) is aligned at an angle relative to the longitudinal axis (10).

8. Base plate-component assembly (5) according to any one of the preceding claims, **characterized in that** a seating (8) arranged on the base plate (6) includes a circle segment and/or straight circumferential sections.

9. Base plate-component assembly (5) according to any one of the preceding claims, **characterized in that** the safety element (7) is a lock washer, a pin, a pin with internal thread, a grub screw with a head or the like.

10. Base plate-component assembly (5) according to any one of the preceding claims, **characterized in that** the base plate-component assembly (5) is a part of a plastic/metal injection moulding tool, a die casting tool, a punching tool, a forming die or the like.

11. Method for positioning a component (1) in a base plate (6) with the aid of an anti-twist protection, wherein the base plate (6) has at least one borehole and/or one borehole with a seating (8) on the surface thereof, and the component (1), which has at least one recess (4) so that the component (1) can be arranged non-rotatably in the borehole in the base plate (6) and/or in the borehole with a seating (8) on the base plate (6) by means of the anti-twist protection, wherein the component (1) has a shaft (2) with a longitudinal axis (10) or has a shaft (2) with a longitudinal axis (10) with a head (3) arranged on one end thereof that can be accommodated at least partly in the seating (8),
**characterized in that**
a safety element (7) is used as the anti-twist protection, and is arranged in the seating (8), in the borehole or in the borehole with a seating (8) on the base plate (6), wherein the safety element (7) has a longitudinal axis which is aligned beside the shaft (2), wherein the longitudinal axis of the safety element (7) and the longitudinal axis (10) of the shaft (2) intersect the surface of the base plate (6) which is furnished with at least one borehole and/or one borehole with a seating, so that the safety element (7) creates a form lock between the component (1), which is an ejector, a core, a cutting punch a forming punch, a positioning pin or a deep-drawing ram, and the base plate (6).

12. Method according to Claim 11, **characterized in that** the positioning of the component (1) is dependent on the alignment of a frontal face of the shaft (2), which is arranged on the end of the shaft (2) which has a longitudinal axis (10).

13. Method according to Claim 11 or Claim 12, **characterized in that** the positioning of the component (1) is dependent on the alignment of a frontal face of the shaft (2), which is arranged on the end of the shaft (2) which has a longitudinal axis (10) that is aligned at an angle relative to the longitudinal axis.

## Revendications

1. Agencement de composants et plaques de support (5),
- avec une plaque de support (6), qui comporte sur sa surface au moins un trou et/ou un trou avec un logement, et
- avec au moins un composant (1), qui comporte au moins un évidement (4) de telle sorte que le composant (1) peut être disposé bloqué en rotation au moyen d'une sécurité anti-rotation dans un trou de la plaque de support (6) et/ou dans un trou avec un logement sur la plaque de support (6), le composant (1) comportant une tige (2) comportant un axe longitudinal (10) à une extrémité de laquelle est disposée au moins en partie une tête (3) logeable dans le logement,
**caractérisé en ce que**,
le composant (1) est un éjecteur, un noyau, un poinçon de découpe, un poinçon de déformation, une goupille de positionnement ou un poinçon d'emboutissage profond, et
**en ce que** la sécurité anti-rotation coopérant avec un évidement (4) disposé sur le composant (1) est un élément de fixation (7), qui est disposé dans un logement (8), un trou ou un trou avec un logement (8) sur la plaque de support (6), l'élément de fixation (7) comportant un axe longitudinal, qui est disposé près de la tige (2), l'axe longitudinal de l'élément de fixation (7) et l'axe longitudinal (10) de la tige (2) coupant au moins un trou et/ou un trou avec une surface de plaque de support (6) comportant un logement.

2. Agencement de composants et plaques de support (5), selon la revendication 1, **caractérisé en ce que** le composant (1) comporte une position de montage dans la plaque de support (3), qui est assurée par au moins un évidement (4) disposé sur le composant (1) et l'élément de fixation (7).

3. Agencement de composants et plaques de support (5), selon la revendication 1 ou de la revendication 2, **caractérisé en ce que** l'élément de fixation (7) dans l'évidement (4) disposé sur le composant (1) et le logement (8) disposé sur la plaque de support (3), le trou disposé sur la plaque de support (3) ou le trou avec un logement (8) disposé sur la plaque de support (3) sont disposés de telle sorte que le composant (1) et la plaque de support sont reliés entre eux par conformité de forme par l'élément de fixation (7).

4. Agencement de composants et plaques de support (5), selon l'une quelconque des revendications précédentes, **caractérisé en ce qu'**un évidement (4) disposé sur le composant (1) comporte un segment de cercle et/ou des sections périphériques linéaires.

5. Agencement de composants et plaques de support (5), selon l'une quelconque des revendications précédentes, **caractérisé en ce que** l'évidement (4) disposé sur le composant (1) est disposé sur la tige (2) et/ou sur la tête (3) logeable dans le logement (8).

6. Agencement de composants et plaques de support (5), selon l'une quelconque des revendications précédentes, **caractérisé en ce que** la tige (2) comporte au moins un parachèvement.

7. Agencement de composants et plaques de support (5), selon l'une quelconque des revendications précédentes, **caractérisé en ce que** la tige (2) comporte un axe longitudinal, une face avant disposée à une extrémité de la tige (2) étant inclinée par rapport à l'axe longitudinal (10).

8. Agencement de composants et plaques de support (5), selon l'une quelconque des revendications précédentes, **caractérisé en ce qu'**un logement (8) disposé sur la plaque de support (6) comporte un segment de cercle et/ou des sections périphériques linéaires.

9. Agencement de composants et plaques de support (5), selon l'une quelconque des revendications précédentes, **caractérisé en ce que** l'élément de fixation (7) est une rondelle d'arrêt, une goupille, une goupille avec un filetage interne, une vis sans tête, une vis avec tête ou un élément analogue.

10. Agencement de composants et plaques de support (5), selon l'une quelconque des revendications précédentes, **caractérisé en ce que** l'agencement de composants et plaques de support (5) est une partie d'un outil d'injection de matière plastique / de métal, d'un outil de coulée sous pression, d'un outil à estamper, d'un outil de formage ou d'un élément analogue.

11. Procédé destiné au positionnement d'un composant (1) au moyen d'une sécurité anti-rotation dans une plaque de support (6), la plaque de support (6) comportant sur sa surface au moins un trou et/ou un trou avec un logement (8) et le composant (1), qui comporte au moins un évidement (4), de telle manière que le composant (1) peut être disposé bloqué en rotation au moyen de la sécurité anti-rotation dans un trou de la plaque de support (6) et/ou dans un trou avec un logement (8) sur la plaque de support (6), le composant (1) comportant une tige (2) comportant un axe longitudinal (10) à une extrémité de laquelle est disposée au moins en partie une tête (3) logeable dans le logement (8),
**caractérisé en ce**
**qu'**un élément de fixation (7) est introduit en tant que sécurité anti-rotation, qui est disposé sur la plaque de support dans le logement (8), le trou ou le trou avec un logement (8), l'élément de fixation (7) comportant un axe longitudinal, qui est disposé près de la tige (2), l'axe longitudinal de l'élément de fixation (7) et l'axe longitudinal (10) de la tige (2) coupant au moins un trou et/ou un trou avec une surface de plaque de support comportant un logement de telle sorte que l'élément de fixation (7) crée une conformité de forme entre le composant (1), qui est un extracteur, un noyau, un poinçon de découpe, un poinçon de formage, une goupille de positionnement ou un poinçon d'emboutissage profond, et la plaque de support (6).

12. Procédé, selon la revendication 11, **caractérisé en ce que** le positionnement du composant (1) est fonction de l'orientation d'une face avant de la tige (2), qui est disposée à l'extrémité de la tige (2), qui comporte un axe longitudinal (10).

13. Procédé, selon la revendication 11 ou la revendication 12, **caractérisé en ce que** le positionnement du composant (1) est fonction de l'orientation d'une face avant de la tige (2), qui est disposée à l'extrémité de la tige (2), qui comporte un axe longitudinal (10).qui est inclinée par rapport à l'axe longitudinal (10) .
